Europäisches Patentamt

European Patent Office

Office européen des brevets

(11) Numéro de publication: **0 149 498**

**A2**

## (12) DEMANDE DE BREVET EUROPEEN

(21) Numéro de dépôt: **85200013.2**

(22) Date de dépôt: **10.01.85**

(51) Int. Cl.⁴: **H 04 L 11/16**

(30) Priorité: **13.01.84 FR 8400504**

(43) Date de publication de la demande:
**24.07.85 Bulletin 85/30**

(84) Etats contractants désignés:
**DE FR GB IT SE**

(71) Demandeur: **S.A. PHILIPS INDUSTRIELLE ET COMMERCIALE**
**50 Avenue Montaigne**
**F-75008 Paris(FR)**

(84) Etats contractants désignés:
**FR**

(71) Demandeur: **N.V. Philips' Gloeilampenfabrieken**
**Groenewoudseweg 1**
**NL-5621 BA Eindhoven(NL)**

(84) Etats contractants désignés:
**DE GB IT SE**

(72) Inventeur: **Segarra, Gérard**
**Société Civile S.P.I.D. 209, rue de l'Université**
**F-75007 Paris(FR)**

(74) Mandataire: **Pinchon, Pierre et al,**
**Société Civile S.P.I.D. 209 rue de L'Université**
**F-75007 Paris(FR)**

(54) Réseau de communication avec un dispositif programmable de filtrage de messages dans au moins une station.

(57) Réseau de communication avec un dispositif programmable de filtrage de messages dans au moins une station.

Dans un mode préféré le dispositif comporte notamment une mémoire vive adressable par son contenu (CAM-EQ) avec "n" lignes de gabarits dont "n-1" sont modifiables sur ordre de la couche supérieure; la gestion des lignes libres s'effectue notamment avec un tampon du type FIFO à "n-1" positions.

FIG. 3

Réseau de communication avec un dispositif programmable de filtrage de messages dans au moins une station.

La présente invention concerne un réseau de communication comportant plusieurs stations, au moins une station étant équipée d'une unité de traitement de données et d'un module de réception pour réceptionner les trames transmises à travers le réseau, lequl module de réception comporte notamment un dispositif électronique de filtrage déterministe pour filtrer lesdites trames, chaque trame comporte au moins une entête (header ), lequel dispositif de filtrage comporte un dispositif de localisation pour localiser dans une trame reçue un groupe de bits, lequel dispositif de filtrage comporte en oute une unité d'identification connectée entre une sortie dudit dispositif de localisation et une première entrée de l'unité de traitement de données, laquelle unité d'identification comporte une mémoire et un comparateur pour identifier les trames destinées à la station en comparant le contenu dudit groupe de bits localisés dans chaque trame à au moins une valeur témoin contenue dans ladite mémoire, et en produisant un signal de résultat propre à chaque trame lorsque ledit groupe a la correspondance requise par rapport à la valeur témoin, laquelle unité de traitement de données est équipée pour recevoir les trames préalablement validées en fonction du signal de résultat.

Un tel réseau est connu de l'article initulé "An introduction to local Area Networks" de D.D. Clark, K.T. Pogran et D.P. Reed, paru dans Proceedings of the IEEE, Vol. 66, N° 11, November 1978, pages 1497 - 1517. Le dispositif électronique de filtrage permet à la station de n'accepter que ces trames circulant dans le réseau qui lui sont destinées. Pour cela le dispositif de localisation localise dans une trame reçue soit une partie par exemple les bits les plus significatifs soit la section entière composée par les bits d'adresses qui font partie de l'entête.

Les bits prélevés dans les bits d'adresses sont alors comparés dans l'unité d'identification, qui à cette fin est éqipée d'un comparateur et d'une mémoire. Dans cette mémoire sont stockée(s) une ou plusieurs valeurs témoin. Lorsque les bits prélevés dans les bits d'adresse sont égaux à une des valeurs témoin sockées dans la mémoire, l'unité d'identification produit un signal de résultat et le transmet à l'unité de traitement de données. Lorsqu'un signal de résultat est produit cela signifie que la trame reçue est destinée à la station, et la trame est alors acceptée par l'unité de traitement de données sous contrôle du signal de résultat. Ainsi la station est équipée pour déterminer quelles trames circulant dans le réseau elle prendra en charge.

Les réseaux de communication sont aujourd'hui bien connus et aussi en plein développement compte-tenu des progrès réalisés dans la technologie de l'électronique.

Une des tendances de développement conduit à un partage et à la distribution des ressources comme, par example, dans les réseaux locaux (LAN), les réseaux commutés (téléphone) et les transmissions par paquet (TRANSPAC) qu'ils soient publics ou privés, les réseaux de télécommunication par satellite, etc... .

La dénomication générale de "réseau à diffusion" (broadcast network) est souvent utilisée, elle signifie que tous les messages, émis sur le support de transmission du réseau par n'importe quel système connecté, seront reçus par tous les systèmes connectés; ce mode de fonctionnement non seulement évite les complications du routage physique des messages (communications directes), mais aussi facilite, d'une part l'implémentation de systèmes de communication entre des entité logiques, d'autre part l'implémentation d'une gestion efficace du réseau en permettant une surveillance du trafic à partir de n'importe quel point de ce réseau.

La souplesse apportée par les réseaux à diffusion ne va pas sans inconvénients; en effet la capacité de mémoire et de traitement de chaque station est vite surchargé

par la multiplicité des messages reçus car, les messages non destinés à la station, doivent quand même être analysés par le dispositif électronique de filtrage et l'unité de traitement de données pour pouvoir n'être ignorés qu'à bon escient.

A cet effet, il existe actuellement deux types de dispositifs de filtrage correspondant l'un au mode d'adressage physique où la station ne reconnait qu'une seule adresse physique (un seul mot d'adresse stocké dans la première mémoire), l'autre au mode d'adressage logique où la station reconnait plusirurs adresses logiques, par exemple les abonnés à un service, ou les participants à une téléconférence, etc. ...; tous les messages émis par chaque entité concernée comportent le même numéro logique, appelé adresse logique du service ou de la téléconférence...., et chaque station connectée à ce même numéro logique doit filtrer tous les messages qui lui sont ainsi adressés en mode diffusé; chaque station doit pouvoir reconnaître simultanément plusieurs numéros logiques.

Un inconvénient des dispositifs électroniques de filtrage connus dans une station faisant partie d'un réseau de communication est que le dispositif de localisation est uniquement capable de localiser une partie bien définie dans les bits d'adresses d'une trame et qu'en plus cette partie bien définie est la même pour chaque trame reçue. Les dispositifs de localisation connus n'offrent donc pratiquement aucune flexibilité dans le chois de parties à délimiter dans les bits d'adresses. En plus la mémoire de l'unité d(identification est une mémoire morte ce qui signifie qu'il n'est pas possible de modifier le cas échéant le contenu de cette mémoire entre les différents types de trames. Due à ces limitations les filtres actuellement implémentés au niveau de la couche de contrôle d'accès n'effectuent qu'un filtrage probabiliste au moyen de composants standards du type modulo (hash-coding) et le filtrage ainsi affectué n'est donc pas parfait d'où une surcharge inutile de la station pouvant déboucher sur la perte du message, ou d'information, si cette méthode d'adres-

4    0149498

sage logique est intensivement utilisée.

La présente invention a pour but d'éviter ces inconvénients en offrant une plus grande flexibilité au dispositif électronique de filtrage.

A cet effet un réseau de communication de données selon l'invention est particulièrement remarquable en ce que le dispositif de localisation comporte une entrée connectée à l'unité de traitement de données pour recevoir un signal de localisation fournissant la position dudit groupe de bits, et en ce que la mémoire est une mémoire programmable entre les trames et ayant une entrée de données connectée à une sortie de données de l'unité de traitement de données pour recevoir au moins une valeur témoin. Le premier signal de localisation fournit au dispositif de localisation les positions à détecter dans les bits de la trame et puisque ce premier signal de localisation peut être fourni pour chaque nouvelle trame il permet au dispositif de localisation de localiser d'autres positions dans chaque trame. En plus la mémoire programmable offre la possibilité de modifier le cas échéant son contenu pour chaque nouvelle trame.

Ainsi il est possible pour une telle station d'effectuer une sélection déterministe des messages qu'elle souhaite recevoir; ce filtrage s'affectue au niveau du dispositif électronique de filtrage ce qui évite une surharge inutile de l'unité de traitement de données; de plus le même dispositif de filtrage filtre aussi bien sur la base des adresses logiques que des adresses physiques, ainsi que sur la base de route autre information contenue dans l'entête, le champ de données et la partie finale de n'importe quelle trame.

L'avantage de l'invention est que les critères de filtrage utilisés par les moyens revendiqués soient programmables sur ordre de l'unité de traitement de données de la station; ce mode d'implémentation permet en effet de multiples applications comme, par exemple, l'implémentation des boîtes aux lettres électroniques distribuées permettant à tout utilisateur déclaré de recevoir des lettres (messages)

avec interrogation ' distance de la boîte par l'utilisateur qui se déplace n'importe où dans le réseau, sans avoir à se préoccuper du routage dans le réseau.

Dans une forme préférentielle un réseau de communication selon l'invention où des trames comprennent des bits d'adresses est particulièrement remarquable en ce que le dispositif de localisation est un dispositif de localisation d'adresse pour localiser dans les bits d'adresses de chaque trame reçue un groupe de bits dont la position est fournie par le signal de localisation, et en ce que l'unité d'identification est une unité d'identification d'adresses.

On obtient ainsi une station dans le réseau de communication capable de prélever différents groupes de bits dans les bits d'adresses de chaque trame reçue, et de déterminer sur base de ces groupes de bits quelles trames sont destinées à la station.

Dans une deuxième forme préférentielle un réseau de communication selon l'invention où des trames comprennent des bits de données est particulièrement remarquable en ce que le dispositif de localisation est un dispositif de localisation de données pour localiser dans les bits de données de chaque trame reçue un groupe de bits dont la position est fournie par le signal de localisation, et en ce que l'unité d'identification est une unité d'identification de données.

On obtient ainsi une station dans un réseau de communication capable de prélever différents groupes de bits dans les bits de données de chaque trame reçue, et de déterminer sur base de ces groupes de bits quelles trames sont destinées à la station.

Dans une troième forme préférentielle un réseau de communication selon l'invention où des trames comprennent des bits d'adresses et des bits de données est particulièrement remarquable en ce que le dispositif de localisation comporte d'une part un dispositif de localisation d'adresses pour localiser dans les bits d'adresses de chaque trame reçue un groupe de bits dont la position est fournie par un premier signal de localisation, et d'autre part un dispositif de localisation de données pour localiser dans les bits de données de chaque trame reçue de bits dont la position est fournie par un second signal de localisation, en ce que l'unité d'identification comporte une unité d'identification d'adresses équipée pour produire un premier signal de résultat et une unité d'identification de données équipée pour produire un second signal de résultat, lequel dispositif de filtrage déterministe comporte un dispositif combinatoire connecté à une sortie de l'unité d'identification d'adresses et à une sortie de l'unité d'identification de données pour recevoir respectivement les premier et second signaux de résultat, lequel dispositif combinatoire est équipé pour produire un troisième signal de résultat sur base desdits premier et second signaux de résultat, laquelle unité de traitement de données est équipée pour recevoir les trames préalablement validées uniquement en fonction du troisième signal de résultat.

On obtient ainsi une station dans un réseau de communication capable de prélever différents groupes de bits dans aussi bien les bits d'adresses que les bits de données de trames reçues. Les premier et second signaux de résultat sont combinés dans le dispositif combinatoire et l'on forme ainsi un troisième signal de résultat.

L'unité de traitement de données ne recevra donc que les trames sélectionnées selon des valeurs témoins qu'elle aura elle-même programmées.

De préférence un réseau de communication selon l'invention est caractérisé en ce que ledit dispositif combinatoire comporte une entrée connectée à l'unité de traitement de données pour recevoir un signal de commande pour commander le mode de combinaison logique à appliquer aux premier et second signaux de résultat.

Ainsi l'unité de traitement de données peut commander le dispositif combinatoire et choisir les combinaisons à appliquer aux premier et second signaux de résultat afin de produire le troisième signal de résultat. Ces combinaisons sont par exemple des combinaisons logiques ET, OU, ou autres.

De préférence un réseau de communication selon l'invention est caractérisé en ce que l'unité d'identification comporte un comparateur "plus-grand-que" et/ou "plus-petit-que" et/ou un comparateur d'égalité.

Cette disposition permet notamment une gestion efficace du réseau en ne filtrant par exemple que les trames émises par des stations dont les addresses et/ou les données sont comprises dans un intervalle de valeurs données.

Dans une seconde forme préférentielle un réseau de communication selon l'invention est particulièrement remarquable en ce que la mémoire de l'unité d'identification est une mémoire adressable par son contenu. L'application d'une mémoire adressable par son contenu permet d'intégrer la mémoire dans le comparateur.

De préférence l'unité d'identification comprend une unité de gestion pour gérer le contenu de chacune des "n" lignes de ladite mémoire sur order de l'unité de traitement. Cela simplifie la mise à jour de la mémoire adressable par son contenu.

De préférence l'uniyé de gestion comporte notamment un tampon de type premier-entré-premier-sorti (FIFO) pour gérer la disponibilité des numéros de ligne, ledit tampon ne comportant que "n-1" positions. Cela permet d'avoir la certitude qu'au moins une ligne conservera une valeur initiale.

Les avantages procurés par un réseau de communication qui comporte au moins une station équipée d'un dispositif électronique de filtrage déterministe conforme à l'invention seront mieux reçus avec la description d'un exemple, non limitatif, d'une implémentation s'appuyant sur les dessins annexés:

La figure 1 représente l'architecture générale d'une station connectée à un réseau.

La figure 2 représente un dispositif de filtrage sélon l'invention.

La figure 3 représente un dispositif de filtrage programmable.

La figure 4 représente un exemple d'un dispositif de localisation.

L'invention s'applique dans un réseau de communication qui comporte plusieurs stations. Les différentes stations ne sont pas nécessairement égales entre elles. Pour l'application de l'invention il suffit qu'une seule station soit dotée des moyens décrits ci-dessous.

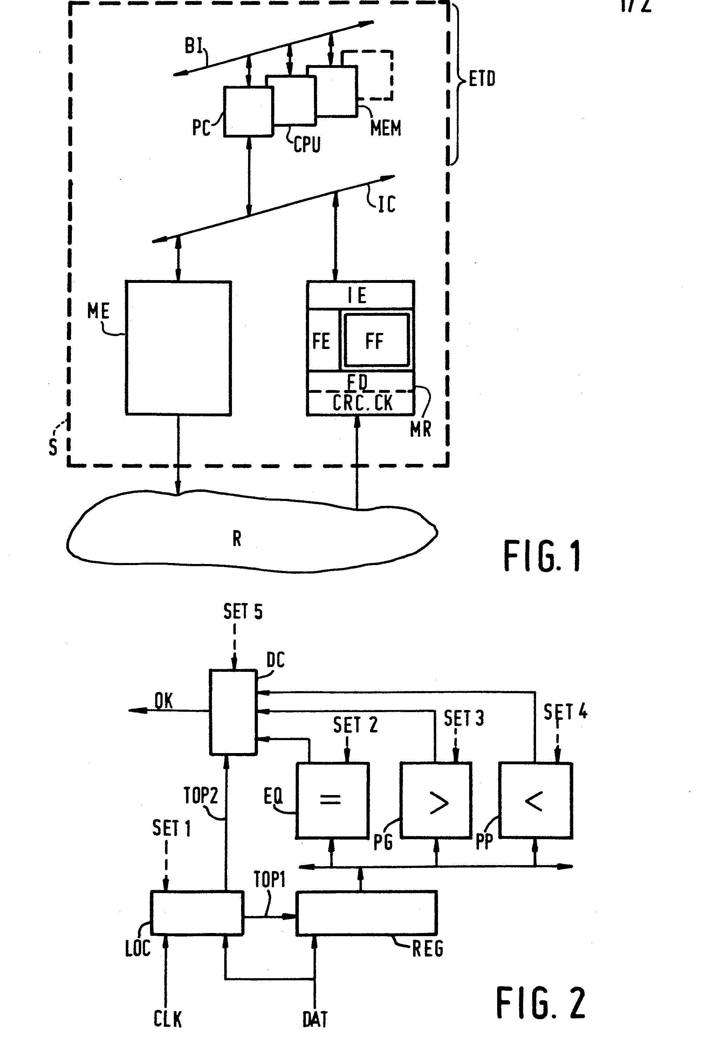

Sur la figure 1, une station (S) qui fait partie d'un réseau est connectée par l'intermédiaire d'un module d'émission (ME) et d'un module de réception (MR) à un canal (R) où transitent des messages: ces deux modules sont connectés à un interface (IC), aussi appelé "bus de communication", pour dialoguer avec l'unité de traitement de données (ETD); l'unité de traitement de données (ETD) comporte généralement un processeur de communication (PC), une unité centrale (CPU), une mémoire (MEM), ..., reliés par un bus interne (BI).

Le module de réception (MR) est chargé de la réception des messages; il comporte en outre un dispositif de contrôle d'erreur (CRC-CK), un dispositif de découpage de la trame (FD), un dispositif de filtrage de la trame (FF), un tampon d'entrée du genre FIFO (FF) et un interface d'entrée (IE). Chaque trame comporte au moins des bits d'adresses et éventuellement des bits de données. Chaque trame reçue est contrôlée par le dispositif de contrôle d'erreur (CRC-CK), et si le contrôle est satisfaisant le dispositif de filtrage (FF) déterministe ou probabiliste filtre sur la base des donnéss fournies par le dispositif de découpage (FD). La trame acceptée, après contrôle et filtrage, est stockée dans le tampon d'entrée (FE). A la demande de l'unité de traitement de données (ETD), les trames stockées sont délivrées l'une après l'autre, genre FIFO, par l'interface d'entrée (IE) au bus de communication (IC).

Si un filtrage du type probabiliste connu (FF) est implémenté, le tampon d'entrée peut être vite saturé et des trames sont alors perdues.

Le dispositif de filtrage (FF) selon l'invention, maintenant décrit avec la figure 2 a pour but d'effectuer un filtrage déterministe pour éviter la saturation du tampon d'entrée.

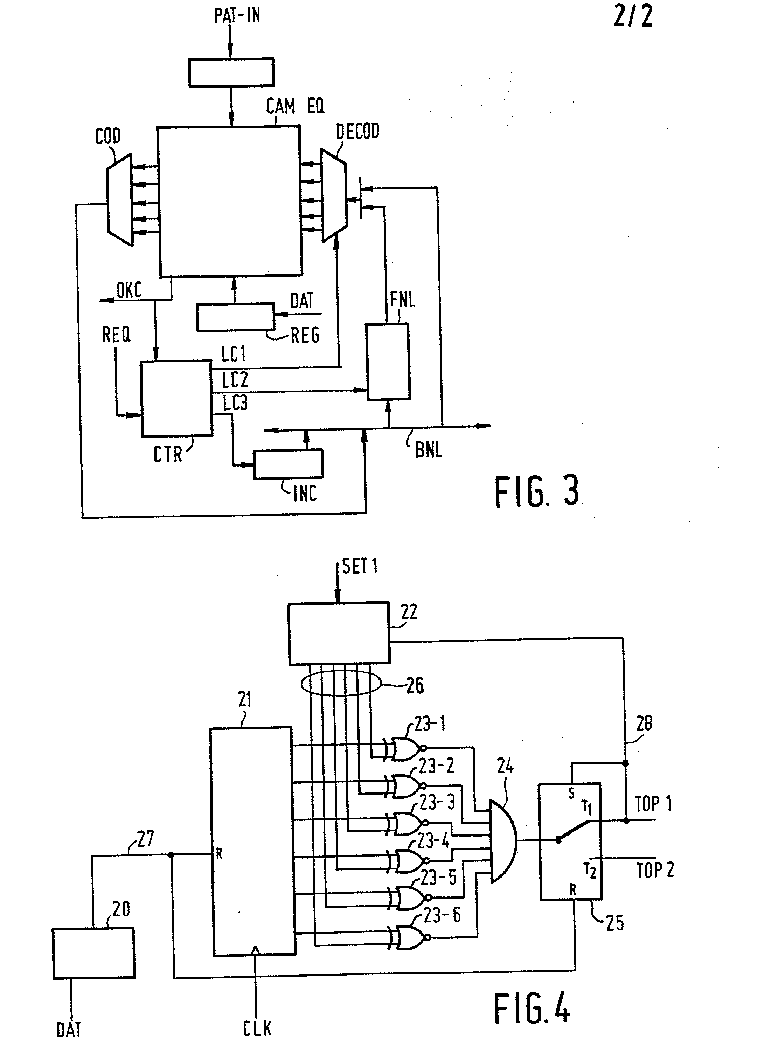

Les informations d'horloge (CLK) et les bits (DAT) de la trame arrivent du réseau avec chaque trame à filtrer; un dispositif de localisation (LOC) du type compteur de bits reçoit d'une part l'information d'horloge (CLK) et d'autre part les bits (DAT). Un exemple d'un tel dispositif de localisation est représenté sur la figure 4, et a pour fonction de permettre l'extraction de certaines zones d'un message. Le dispositif de localisation comporte un décodeur 20 de début de trame auquel sont appliqués les bits DAT. Comme son nom l'indique ce décodeur 20 décode parmi ces bits DAT reçus le début d'une nouvelle trame. La réalisation du décodeur 20 est choisie en fonction du protocole de communication qui est de rigueur dans le réseau. Par exemple dans le cas où l'allocation du droit è émettre se fait par l'intermédiaire d'un jeton (token-ring bus), le décodeur 20 décode la présence du jeton sur le canal auquel sont connectées les différentes stations. Dans le cas où chaque trame est encadrée d'une indication de début et/ou d'une indication de fin de message, le décodeur 20 est équipé pour décoder cette indication de début et/ou de fin de message.

Lorsque le décodeur 20 a décodé le début d'une nouvelle trame, il émet un signal de remise à zéro sur la ligne 27 qui est connectée aux entrées de remise à zéro d'un compteur 21 et d'un commutateur 25. Ce signal de remise à zéro positionne le commutateur 25 dans sa position T1 et remet le compteur 21 à zéro. Le compteur 21 est un compteur binaire statique à sortie parallèle qui comporte une entrée d'horloge auquel le signal d'horloge (CLK) est appliqué.

L'on suppose que la fréquence du signal d'horloge est égale à la fréquence des bits de données. Le compteur 21 compte alors après être remis à zéro les impulsions du signal d'horloge et applique sa valeur actuelle en permanence sur ses sox sorties parallèles. Il sera clair que ce nombre de six sorties n'est cité qu'à titre d'exemple et que l'invention n'est nullement limitée à cet exemple. Les six sorties parallèles du compteur sont chacunes respectivement reliées à une première entrée d'une porte logique $\overline{XOR}$ (OU- exclusif-NON) (23-1, 23-2, 23-3, 23-4, 23-5, 23-6). Une deuxième netrée de chacune des portes logiques $\overline{XOR}$ est reliée par une ligne de connexion respective qui fait partie d'un ensemble de lignes de connexion 26, à une sortie d'une mémoire 22. La sortie de chacune des portes logiques $\overline{XOR}$ 23 est reliée à une entrée respective d'une porte logique ET 24 dont la sortie est connectée à une entrée du commutateur 25.

Sous contrôle d'un premier signal de localisation fourni par l'unité de traitement de données (ETD) un premier (M1) et un second (M2) mot binaire (M2 > M1) sont chargés dans la mémoire 22 qui est par exemple constituée d'un tampon. Après le chargement de ces mots, le premier mot M1 est transmis par les lignes de connexion 26 aux deuxièmes entrées des portes logiques $\overline{XOR}$ 23. Lorsque le compteur 21 a atteint une première valeur qui est égale à la valeur indiquée par le premier mot M1, chacunes des portes logiques $\overline{XOR}$ 23 délivre à sa sortie la valeur logique 1 qui est alors transmise à la porte logique ET 24. L'apparition d'une valeur logique 1 à chacune des six entrées de la porte logique ET 24 va provoquer l'apparition à son tour d'une valeur logique 1 à la sortie de cette porte logique ET 24.

Puisque (après le signal de remise à zéro) le commutateur se trouve en position T1, la valeur logique 1 est transmise à la ligne 29 et forme un signal de départ TOP 1 dont la fonction sera décrite plus loin.

La ligne 28 est connectée à une entrée de commande du commutateur 25.

Le signal de départ TOP 1 qui est ainsi appliqué à cette entrée de commande du commutateur va provoquer la commutation vers la position T2 du commutateur. La ligne 28 est aussi connectée à une entrée de commande de la mémoire 22, et le signal de départ TOP 1 va provoquer l'application du second mot M2 aux portes logiques $\overline{\text{XOR}}$ 23.

Lorsque le compteur 21 aura atteint une seconde valeur qui est égale à la valeur indiquée par le second mot M2, un signal d'arrivée TOP 2 sera engendré de façon analogue à celle décrite pour le signal de départ TOP 1.

Les signaux TOP 1 et TOP 2 correspondent à des positions bien déterminées dans la trame puisque comme il fût mentionné auparavant le compteur 21 compte les impulsions du signal d'horloge, lesquelles ont la fréquence des bits de données. Ainsi les mots M1 et M2 indiquent des positions bien déterminées dans la trame, et ces positions sont détectées par l'ensemble formé par le compteur 21, la mémoire 22 et les portes logiques 23 et 24.

Les signaux TOP 1 et TOP 2 permettent au dispositif de filtrage de ne prendre en compte que cette partie de la trame incluse entre ces positions bien déterminées. Parce que la mémoire 22 peut le cas échéant être chargée pour chaque trame sur ordre (SET 1) de la couche supérieure il est ainsi possible de modifier pour chaque trame les limites de la partie prise en compte.

La mémoire 22 peut le cas échéant aussi être formée d'une table dans laquelle sont mémorisés plusieurs mots binaires. Le premier signal de positionnement SET 1 émis sur ordre de la couche supérieure indique alors les positions dans la table où sont localisés les mots M1 et M2 qui représentent les positions à détecter dans la trame.

Dans le dispositif de filtrage décrit avec la figure 2 la production par le dispositif de localisation (LOC) du signal de départ TOP 1 correspond à la présentation parmi les bits (DAT) de la trame du premier bit faisant partie d'un groupe de bits qui forme les bits d'identification d'une nouvelle trame. Le signal de départ TOP 1 est envoyé à un registre à décalage (REG) qui sous contrôle de ce signal TOP 1 va charger successivement les bits faisant partie de ce groupe. La sortie du registre (REG) est connectée aux comparateurs de l'unité d'identification. Dans l'exemple de la figure 2 il y a trois comparateurs notamment un comparateur d'égalité (EQ), un comparateur plus grand que (PG) et un comparwteur plus petit que (PP). Les comparateurs (EQ, PG, PP) sont activés et positionnés sur ordre SET 2 respectivement SET 3, SET 4 de l'unité de traitement de données. La sortie des comparateurs est connectée à une entrée respective d'un dispositif combinatoire (DC). Le dispositif combinatoire est commandé sous contrôle d'un signal de commande (SET 5) produit par l'unité de traitement de données.

Lorsque le registre (REG) a reçu le signal de départ TOP 1 il va charger successivement les bits (DAT) qui lui sont offert à son entrée de données. Ainsi vont être chargés successivement les bits faisant partie d'un groupe de bits sur base duquel l'identification de la trame va s'effectuer. Les bits faisant partie dudit groupe sont transmis aux comparateurs pour y être comparés à des valeurs témoins contenues dans des mémoires faisant partie des comparateurs. Ces mémoires sont programmables pour chaque trame par l'intermédiaire des ordres SET 2, SET 3 et SET 4. Au moyen de ces ordres SET 2, SET 3 et SET 4, l'unité de traitement de données va donc d'une part charger des valeurs témoins dans les mémoires et d'autre part activer un ou plusieurs des comparateurs (EQ, PG, PP). La comparaison du groupe de bit localisé dans la trame par le dispositif de localisation (LOC) va donc être effectuée par le comparateur qui aura été activé par l'unité de traitement de données. Le résultat de cette comparaison est transmis au dispositif combinatoire (DC). Lorsque le dispositif combinatoire aura reçu le signal TOP 2 indiquant la fin dudit groupe de bit, il va combiner logiquement tous ces résultats de comparaison. Si ledit groupe de bits a la correspondance requise par rapport à la valeur témoin, les résultats de comparaison seront positifs et le dispositif combinatoire formera un signal de résultat (OK). La décision d'acceptation formée par le signal de résultat est transmise à l'interface d'entrée (IE) pour valider le stockage de la trame après filtrage.

Le groupe de bits localisé dans la trame sur lequel s'effectue l'identification de la trame peut se situer soit dans les bits d'adresses de la trame, soit dans les bits de données de la trame, soit dans aussi bien les bits d'adresses que de données. A cette fin le dispositif de filtrage selon l'invention comprendra soit un dispositif de localisation d'adresse et une unité d'identification d'adresse, soit un dispositif de localisation de données et une unité d'identification de données, soit les deux à la fois, ou le même dispositif effectue les deux filtrages successivement.

Mais il sera clair qu'un dispositif de filtrage selon l'invention n'est pas limité à l'exemple décrit dans la figure 2, et que d'autres réalisations sont possibles. Ainsi les comparateurs peuvent effectuer la comparaison soit bit par bit et produire un résultat pour chaque bit, soit sur base du groupe entier et produire ainsi directement un signal de résultat. Dans le dernier cas le signal TOP 2 est alors aussi appliqué aux comparateurs et au registre à décalage et le chargement du groupe de bits dans les comparateurs ne s'effectue que sous contrôle du signal TOP 2.

Le dispositif combinatoire (DC) peut par exemple dans le cas où il reçoit un ou plusieurs signaux de résultat en provenance des comparateurs être équipé pour combiner logiquement tous ces signaux de résultat et n'en former qu'un seul qui sera alors transmis à l'unité de traitement de données. Ainsi par exemple dans le cas où l'acceptation d'une trame sera déterminée sur base d'un groupe de bits faisant partie des bits d'adresses et d'un groupe de bits faisant partie des bits de données, le dispositif combinatoire combinera les deux signaux de résultat pour en former un troisième. A cette fin le dispositif combinatoire est par exemple équipé de portes logiques ET et OU, et la sélection d'une de ces portes sera déterminée par l'ordre SET 5.

Selon l'invention un dispositif de filtrage programmable avec comparaison d'égalité selon la figure 3 est particulièrement intéressant. Dans la figure 3, seule la partie comparateur d'égalité (EQ) de la figure 2 est représentée avec ses organes de contrôle.

Dans la figure 3 le comparateur d'égalité est une mémoire adressable par son contenu (CAM-EQ) une telle mémoire adressable par son contenu est par exemple décrit dans la demande de brevet française N° 2 412 140. Les données (DAT) d'une trame sont entrées comme susdit via le registre (REG), et si une des valeurs contenues dans la mémoire adressable (CAM-EQ) est égale aux bits d'identification de la trame le signal d'acceptation (OKC) est émis.

Nous allons maintenant décrire les circuits et le fonctionnement de l'initialisation et de la mise à jour, insertion et suppression, des valeurs contenues dans la mémoire (CAM-EQ).

Comme susdit, l'invention permet d'effectuer un filtrage déterministe des trames sur la base des bits d'identification de la/les destination(s) de chaque trame, et sur base de bits prélevé dans la portion de trame. Nous appellerons gabarit (=pattern) chaque configuration de bits valide pour une station; chaque station au niveau de son équipement de traitement de données (ETD figure 1), connaît d'une part le gabarit à insérer dans chaque trame qu'elle émet et d'autre part les gabarits des trames qu'elle reconnaître; la mémoire (CAM-EQ) contient à cet effet une pluralité de lignes pour mémoriser les gabarits à reconnaître; la dimension courante d'un gabarit est de 48 bits, et un nombre de lignes de 256, par exemple, est une valeur normale pour une station active dans un réseau.

En conséquence, la mémoire (CAM-EQ) comporte, par exemple, 256 lignes de 48 bits chacune ce qui lui donne une capacité de mémoriser 256 gabarits; dans les réseaux, il est souvent convenu que le gabarit "III ... III", tous les bits à "1", correspond à des trames destinées à toutes les stations (general broad cast) c'est pourquoi cette valeur a été choisie comme valeur initiale pour toutes les lignes de gabarit de la mémoire programmable adressable par son contenu (CAM-EQ).

Le dispositif d'initialisation comporte un automate de contrôle microprogrammé (CTR) pour contrôler notamment un décodeur (DECOD) via une première ligne de contrôle (LC1), un tampon de numéro de ligne du genre FIFO (FNL) via une deuxieme ligne de contrôle (LC2) et un compteur (INC) via une troisième ligne de contrôle (LC3); le compteur (INC) fournit un numéro de ligne à un bus de numéro de ligne (BNL) auquel sont connectés d'une part le tampon (FNL) et d'autre part le décodeur (DECOD); le décodeur (DECOD) active la ligne de la mémoire (CAM-EQ) correspondante au numéro de ligne qu'il reçoit soit du bus de numéro de ligne (BNL), soit du tampon (FNL).

A l'initialisation, la valeur par défaut du gabarit, tous les bits à "1" comme susdit, est introduit dans les colonnes de la mémoire (CAM-EQ) par la connexion (PAT-IN), le compteur (INC) fournit la valeur "0" au décodeur (DECOD) et l'automate microprogrammé (CTR) active la première ligne de contrôle (LC1) pour commander l'écriture du gabarir "tout à 1" sur la ligne "0" de la mémoire (CAM-EQ); ensuite le compteur (INC) est successivement incrémenté de "1" en "1" jusqu'à la valeur 255 pour initialiser entièrement à "1" les 256 lignes de la mémoire (CAM-EQ). Simultanément le tampon (FNL) a aussi été initialisé de la manière suivante; le tampon (FNL) est utilisé pour mémoriser les numéros des lignes libres de la mémoire (CAM-EQ); ce tampon a une capacité de 255 numéros de lignes car il est apparu particulièrement intéressant de ne pouvoir ultérieurement modifier que 255 lignes de la mémoire (CAM-EQ) de telle sorte qu'au moins une ligne conserve toujours le gabarit "tout à 1"; ainsi chaque numéro de ligne écrite pendant l'initialisation est successivement validé dans le tampon des numéros de ligne (FNL) du genre FIFO de telle sorte que, à la fin de l'initialisation, tous les numéros de ligne de 1 à 255 sont mémorisés dans le tampon (FNL) le numéro 1 étant le premier entré, suivi du numéro 2, ... jusqu'au dernier, le numéro 255; selon le principe du tampon FIFO (FNL) le premier numéro à sortir sera donc le 1, puis le 2, etc. ... .

Après l'initialisation, le dispositif de filtrage est prêt à enregistrer indifféremment des insertions ou des suppressions de gabarits à filtrer; dans les deux cas, le gabarit concerné est fourni par l'équipement de traitement de données (ETD, figure 1) par la connexion (PAT-IN) ainsi que la nature de la requête (REQ) qui est transmise à l'automate microprogrammé (CTR).

Dans le cas d'une suppression de gabarit, le principe de l'opération consiste à mettre des "1" à la place du gabarit à supprimer si celui-ci est effectivement présent; pour ce faire, le gabarit à supprimer, fourni via la connexion (PAT-IN) comme susdit, est analysé par la mémoire (CAM-EQ) qui fournit la réponse (OKC) si le gabarit est effectivement présent.

Bien entendu cette réponse (OKC) n'est pas prise en compte par le dispositif combinatoire (DC) qui est inhibé pendant les requêtes (REQ). Si le gabarit à supprimer n'est pas présent ($\overline{OKC}$) l'opération de suppression ne peut s'effectuer et la requête est annulée par l'unité de traitement de données. Si le gabarit à supprimer est effectivement présent (OKC) dans la mémoire (CAM-EQ), le codeur (COD) détermine quel est le numéro de ligne concerné et le transmet au bus de numéro de ligne (BNL) auquel il est connecté comme susdit. A ce moment l'automate microprogrammé (CTR) donne un order sur la ligne LC1 pour écrire des "1", comme lors de l'initialisation, sur la ligne dont le numéro est présent sur le bus (BNL); simultanément, le numéro de ligne conercé, qui est donc devenu libre pour un nouveau gabarit, est stocké sous contrôle d'un signal sur la ligne LC2 dans le tampon (FNL) exactement comme lors de l'initialisation comme susdit; la suppression de gabarit est alors terminée et un compte-rendu peut être transmis à la couche supérieure à travers l'interface d'entrée (IE, figure 1).

Dans le cas d'une insertion de gabarit, le principe de l'opération consiste à écrire ce gabarit dans la mémoire (CAM-EQ), si d'une part ce gabarit n'y est pas déjà présent et si d'autre part il y a une place vide pour ce nouveau gabarit.

Comme susdit la non-présence du gabarit à insérer est vérifiée par la réponse ($\overline{OKC}$) de la mémoire (CAM-EQ).

Par ailleurs, la présence d'une place libre est vérifiée par le fait que le tampon du numéro de ligne (FNL) n'est pas vide c'est-à-dire qu'un numéro de ligne est délivré au décodeur (DECOD).

On peut rappeler qu'une ligne libre est une ligne "tout à 1" autre que la ligne numéro 0. A ce moment l'automate microprogrammé (CTR) donne un order pour écrire le gabarit à insérer sur la ligne dont le numéro est fourni par le tampon (FNL); simultanément le numéro de ligne qui vient d'être utilisé est supprimé dans le tampon (FNL).

En résumé, le dispositif programmable de filtrage déterministe ci-dessus décrit et conforme à l'invention, est conçu pour filtrer les trames transmises à travers le réseau sur la base des gabarits présents dans une mémoire adressable par son contenu (CAM-EQ), lequel contenu est en permanence modifiable par l'équipement de traitement de données (ETD) de la station.

Les possibilités d'utilisation du dispositif selon l'invention sont nombreuses grâce à la souplesse apportée notamment aux réseaux à diffusion; dans un tel réseau, une entité, par exemple un utilisateur, peut se déclarer dans une station "i" quelconque ce qui va se traduire par le fait que le gabarit de l'entité est mémorisé dans une ligne de la mémoire (CAM-EQ) de la station "i"; tous les messages adressés à cette entité vont alors être acceptés par le filtre conforme à l'invention et mémorisés par la station "i"; si l'entité se déplace adsn l'organisation, et se déclare à nouveau dans une autre station "n", cette station "n" va mémoriser le gabarit de l'entité dans sa propre mémoire (CAM-EQ) et va interroger, en mode diffusé par exemple, les autres stations pour leur demander de lui transmettre les messages destinés à l'entité déclarée; la station "i" va reconnaître le message d'interrogation, y répondre et supprimer le gabarit de l'entité dans sa propre mémoire (CAM-EQ); ceci est une application typique de boîte aux lettres électronique.

**0149498**

Une autre possibilité est l'observation du trafic dans le réseau dans le but de mieux gérer le réseau; pour ce faire il est souvent nécessaire d'effectuer un zoom sur une région particulière du réseau, ceci correspond à un filtrage sélectif des messages émis et/ou reçus par certaines stations dont les gabarits sont connus; ces gabarits connus peuvent être mémorisés dans la mémoire (CAM-EQ) de la station d'observation du réseau qui ainsi recevra tous les messages concernant la région "zoomée"; dans le même but il est aussi possible d'observer le trafic concernant tous les gabarits compris entre deux valeurs "K" et "m" en utilisant les comparateurs "plus grand que" et "plus petit que" susdits; "K" et "m" peuvent être soit des gabarits de stations physiques, soit des gabarits logiques d'entités connues dans le réseau; par la mise en oeuvre du dispisitif programmable de découpage de la trame (FD), comme susdit, "K" et "m" peuvent être à volonté soit le gabarit de l'émetteur soit le gabarit du destinataire puisque les deux gabarits sont présents dans chaque trame. Ces exemples donnent un aperçu non limitatif de toutes les possibilités d'application apportées par l'invention.

REVENDICATIONS:

1. Réseau de communication comportant plusieurs stations, au moins une station étant équipée d'une unité de traitement de données et d'un module de réception pour réceptionner les trames transmises à travers le réseau, lequel module de réception comporte notamment un dispositif électronique de filtrage déterministe pour filtrer lesdites trames, chaque trame comporte au moins une entête (header), lequel dispositif de filtrage comporte un dispositif de localisation pour localiser dans une trame reçue un groupe de bits, lequel dispositif de filtrage comporte en outre une unité d'identification connectée entre une sortie dudit dispositif de localisation et une première entrée de l'unité de traitement de données, laquelle unité d'identification comporte une mémoire et un comparateur pour identifier les trames destinées à la station en comparant le contenu dudit groupe de bits localisés dans chaque trame à au moins une valeur témoin contenue dans ladite mémoire, et en produisant un signal de résultat propre à chaque trame lorsque ledite groupe a la correspondance requise par rapport à la valeur témoin, laquelle unité de traitement de données est équipée pour recevoir les trames préalablement validées en fonction du signal de résultat, caractérisé en ce que le dispositif de localisation comporte une entrée connectée à l'unité de traitement de données pour receivoir un signal de localisation fournissant la position dudit groupe de bits, et en ce que la mémoire est une mémoire programmable entre les trames et ayant une entrée de données connectée à une sortie de données de l'unité de traitement de données pour recevoir au moins une valeur témoin.

2. Réseau de communication selon la revendication 1, dans lequel des trames comprennent des bits d'adresses, caractérisé en ce que le dispositif de localisation est un dispositif de localisation d'adresse pour localiser dans les bits d'adresses de chaque trame reçue en groupe de bits dont la position est fournie par le signal de localisation, et en ce que l'unité d'identification est une unité d'identification d'adresses.

3.      Réseau de communication selon la revendication 1, dans lequel des trames comprennent des bits de données, caractérisé en ce que le dispositif de localisation est un dispositif de localisation de données pour localiser dans les bits de données de chaque trame reçue un groupe de bits dont la position est fournie par le signal de localisation, et en ce que l'unité d'identification est une unité d'identification de données.

4.      Réseau de communication selon la revendication 1 dans lequel des trames comprennent des bits d'adresses et des bits de données, caractérisé en ce que le dispositif de localisation comporte d'une part un dispositif de localisation d'adresses pour localiser dans les bits d'adresses de chaque trame reçue un groupe de bits dont la position est fournie par un premier signal de localisation, et d'autre part un dispositif de localisation de données pour localiser dans les bits de données de chaque trame reçue un groupe de bits dont la position est fournie par un second signal de localisation, en ce que l'unité d'identification comporte une unité d'identification d'adresses équipée pour produire un premier signal de résultat et une unité d'identification de données équipée pour produire un second signal de résultat, lequel dispositif de filtrage déterministe comporte un dispositif combinatoire connecté à une sortie de l'unité d'identification d'adresses et à une sortie de l'unité d'identification de données pour recevoir respectivement les premier et second signaux de résultat, lequel dispositif combinatoire est équipé pour produire un troisième signal de résultat sur base desdits premier et second signaux de résultat, laquelle unité de traitement de données est équipée pour recevoir les trames préalablement validées uniquement en fonction du troisième signal de résultat.

5. Réseau de communication selon la revendication 4, caractérisé en ce que ledit dispositif combinatoire comporte une entrée connectée à l'unité de traitement de données pour recevoir un signal de commande pour commander le mode de combinaison logique à appliquer aux premier et second signaux de résultat.

6. Réseau de communication selon l'une quelconque des revendications 1 à 5, caractérisé en ce que l'unité d'identification comporte un comparateur "plus-grand-que".

7. Réseau de communication selon l'une quelconque des revendications 1 à 5, caractérisé en ce que l'unité d'identification comporte un comparateur "plus-petit-que".

8. Réseau de communication selon l'une quelconque des revendications 1 à 5, caractérisé en ce que l'unité d'identification comporte un comparateur d'égalité.

9. Réseau de communication selon la revendication 8, caractérisé en ce que la mémoire de l'unité d'identification est une mémoire adressable par son contenu.

10. Réseau de communication selon la revendication 9, caractérisé en ce que l'unité d'identification comprend une unité de gestion pour gérer le contenu de chacune des "n" lignes de ladite mémoire sur ordre de l'unité de traitement.

11. Réseau de communication selon la revendication 10, caractérisé en ce que l'unité de gestion comporte notamment un tampon de type premier-entré premier sorti (FIFO) pour gérer la disponibilité des numéros de ligne, ledit tampon ne comportant que "n-1" positions.

12. Dispositif électronique de filtrage à utiliser dans au moins une station faisant partie d'un réseau de communication selon l'une quelconque des revendications précédentes.

FIG.1

FIG. 2

1-II-PHF 84-500

FIG. 3

FIG.4